# FASCICULE DE BREVET EUROPEEN

(11) **EP 3 074 641 B1**
(45) Date de publication et mention de la délivrance du brevet: **11.12.2019**
(21) Numéro de dépôt: 14790210.0
(22) Date de dépôt: 30.09.2014
(51) Int. Cl.: B60K 11/02, F16B 5/00, F16B 17/00

(54) **ASSEMBLAGE AVEC GUIDAGE D'UNE LEVRE MINCE ALLONGEE DANS UNE FENTE ETROITE ALLONGEE ET APPLICATION A L'ASSEMBLAGE D'UN GUIDE-AIR SUR UNE BUSE**
VERBINDUNG EINER FÜHRUNG MIT EINER LÄNGLICHEN LIPPE IN EINEM LÄNGLICHEN SCHLITZ UND ANWENDUNG AUF EINE VERBINDUNG EINER LUFTFÜHRUNG MIT EINER DÜSE
ASSEMBLY OF A GUIDE WITH AN ELONGATED LIP IN AN ELONGATED SLOT AND APPLICATION TO AN ASSEMBLY OF AN AIR GUIDE TO A NOZZLE

(30) Priorité: 28.11.2013 FR 1361791
(43) Date de publication de la demande: 05.10.2016
(73) Titulaire: Renault, 92100 Boulogne Billancourt (FR)
(72) Inventeur: DAVID, Pascal, F-78960 Voisin Le Bretonneux (FR); BUI, Joseph, F-78130 Les Mureaux (FR)
(86) Numéro de dépôt international: PCT/FR2014/052480
(87) Numéro de publication internationale: WO 2015/079131

(56) Documents cités:
- DE-A1- 3 341 929
- DE-A1- 10 233 859
- DE-U1- 29 623 095
- US-A- 2 266 593
- US-A1- 2005 214 068
- US-A1- 2011 017 742

## Description

La présente invention concerne l'assemblage avec guidage d'une lèvre allongée relativement mince dans une fente allongée relativement étroite, et son application à l'assemblage d'un guide-air sur une buse. Le document DE 102 33 859 A1 divulgue un tel assemblage.

Dans un certain nombre d'applications, il est nécessaire d'emboîter un élément dans un autre, le premier élément présentant au moins une paroi se terminant par une lèvre ou lame allongée relativement mince qui doit être étroitement reçue dans une fente allongée formée dans le second élément. C'est le cas par exemple dans le domaine de la construction automobile lorsqu'il s'agit de venir emboîter sur une buse de groupe moto-ventilateur les parois haute et basse d'un guide d'air ; la buse comprend en partie haute et basse des parois parallèles horizontales sur lesquelles des plaques parallèles rattachées par un grand côté à la paroi forment des fentes allongées de faible épaisseur ouvertes sur trois côtés ; le guide d'air comprend en partie haute et basse deux lèvres allongées à bords rectilignes qui doivent s'introduire dans les fentes parallèles étroites de la buse ; à la suite de cet emboîtement, le guide d'air est finalement fixé sur la buse grâce à des éléments de clipsage complémentaires appropriés. L'introduction d'une pièce dans l'autre s'avère assez difficile pour le monteur du fait que le guide d'air est une pièce relativement grande et souple qui donc se déforme lorsqu'on la manipule et il n'est donc pas aisé de mettre correctement en correspondance les zones à clipser. Cette mise en correspondance est particulièrement difficile en partie basse de la buse, laquelle n'est pas aisément visible par le monteur : ce dernier doit donc effectuer le montage en aveugle, ce qui peut s'avérer complexe.

Le but de l'invention est de proposer un assemblage d'une lèvre allongée relativement mince dans une fente allongée à trois côtés, relativement étroite, pour lequel l'introduction d'un élément dans l'autre est facilitée, notamment en absence de visibilité de la fente.

L'invention atteint son but grâce à un assemblage selon la revendication 1 d'un premier élément avec un second élément, réalisé par l'assemblage d'une lèvre mince allongée appartenant au second élément dans une fente étroite allongée formée par les trois côtés d'une plaque plane allongée fixée parallèlement à une paroi plane du premier élément, caractérisé en ce que qu'au moins un élément formant guide est solidaire d'un côté de grande longueur de ladite plaque plane allongée formant un bord de la fente, ledit élément formant guide comportant une surface de glissement agencée pour coopérer avec la lèvre pour que l'introduction de la lèvre dans la fente commence par le glissement de la lèvre sur la surface de glissement et se poursuive ensuite lors de l'avancée de la lèvre par l'introduction progressive de la lèvre dans la fente.

Avantageusement, selon un premier mode de réalisation, la surface de glissement d'un élément formant guide peut être une surface plane formant un plan incliné par rapport à ladite plaque plane allongée. Notamment, la surface de glissement peut comporter latéralement deux zones d'inclinaison supérieure à l'inclinaison de ladite surface de glissement. Ces zones peuvent par exemple être des coins de la surface de glissement. Ces zones d'inclinaison supérieure peuvent permettre de faciliter l'introduction de la lèvre, notamment lorsque la lèvre comporte, en direction du premier élément, un bord concave et se termine latéralement par des pointes avancées.

Avantageusement, selon un deuxième mode de réalisation, la surface de glissement d'un élément formant guide peut être une surface de section transversale curviligne, c'est-à-dire que cette section transversale est en forme d'arc de cercle ou d'ellipse ou d'une courbe approchante.

L'assemblage du premier élément avec le second élément peut comprendre un unique élément formant guide s'étendant sur toute la longueur de ladite fente ou sur sensiblement toute la longueur de ladite fente, par exemple sur au moins 70% de la longueur de cette fente.

L'assemblage du premier élément avec le second élément peut alternativement comprendre au moins deux éléments formant guide distincts disposés le long de la fente. Par exemple, deux éléments formant guide peuvent être disposés aux extrémités latérales de la fente ou à proximité de celles-ci. D'autres éléments formant guide distincts peuvent être prévus entre ces deux éléments formant guide disposés latéralement, par exemple répartis régulièrement entre eux.

Le nombre et les dimensions d'éléments formant guide pourront être choisis en fonction de l'espace disponible dans l'environnement de la fente et des efforts qu'ils devront supporter lors de l'introduction de la lèvre à l'intérieur de la fente du fait du glissement de cette lèvre sur leur surface de glissement.

Avantageusement et de manière non limitative, ladite paroi plane peut présenter, sur une face opposée à la fente, au moins une butée s'étendant dans le prolongement d'un grand bord de la fente sensiblement perpendiculairement à ladite paroi plane, ladite butée étant agencée pour bloquer la lèvre et l'empêcher de passer en dehors de la fente. De cette manière, l'avancement de la lèvre est bloqué et le monteur sait qu'il doit la déplacer pour la faire pénétrer dans la fente. Une telle butée peut s'étendre sur toute la profondeur de la fente.

Avantageusement et de manière non limitative, le premier élément peut comprendre, à l'intérieur de la fente, une pluralité de nervures de calage disposées perpendiculairement à la direction d'introduction de la lèvre dans la fente et perpendiculairement à la paroi plane et à la plaque plane, lesdites nervures de calage étant agencées pour coopérer avec la lèvre lors de son introduction dans la fente allongée de manière à la guider au fond de cette dernière et à la caler perpendiculairement à la paroi plane lorsqu'elle est entièrement introduite dans la fente. Ces nervures de calage peuvent être indifféremment solidaires de la paroi plane ou de la plaque plane allongée du premier élément. Toutefois, une solidarisation à la paroi plane peut permettre d'améliorer le guidage de la lèvre au fond de la fente.

Avantageusement, la lèvre mince allongée peut présenter, en direction du premier élément, un bord concave et se terminer latéralement par des pointes avancées. Ceci peut permettre de faciliter l'introduction de la lèvre à l'intérieur de la fente, notamment lorsqu'un élément formant guide s'étend sur toute la longueur de la fente ou lorsque des éléments formant guide distincts sont disposés latéralement. L'introduction de la lèvre dans la fente commence alors par l'introduction des pointes dans lesdites zones de la fente comprenant un élément formant guide et se poursuit ensuite lors de l'avancée de la lèvre par l'introduction progressive du reste du bord concave de la lèvre.

Avantageusement et de manière non limitative, le ou les éléments formant guide sont réalisés d'une pièce avec le premier élément, par exemple par moulage. On peut toutefois envisager de fixer un ou des éléments formant guide au premier élément, par exemple par collage. Il en est de même pour les butées et/ou les nervures de calage.

Selon l'invention, l'assemblage est l'assemblage d'un guide d'air sur une buse de ventilateur dans un véhicule automobile. Avantageusement, la fente est disposée sur une partie de la buse de ventilateur, non visible lors du montage, notamment une partie basse.

D'autres caractéristiques et avantages de l'invention ressortiront de la description suivante d'un exemple de réalisation. Il sera fait référence aux dessins annexés sur lesquels :
La figure 1 est une vue partielle en perspective de dessous et d'avant de la partie basse d'une buse de ventilateur et d'un guide d'air à assembler avec la buse, par emboîtement, en position d'approche.
La figure 2 est une vue de détail en perspective de trois-quarts avant de la partie basse de la buse et du guide d'air de la figure 1 en position d'emboîtement.
Les figures 3 à 6 sont des vues de détail en perspective de trois-quarts avant de la partie basse de la buse de la figure 1, selon différents modes de réalisation des éléments formant guide.

L'assemblage selon l'invention vise à emboîter un guide d'air 1 (second élément) sur la buse 2 (premier élément) d'un groupe moto-ventilateur.

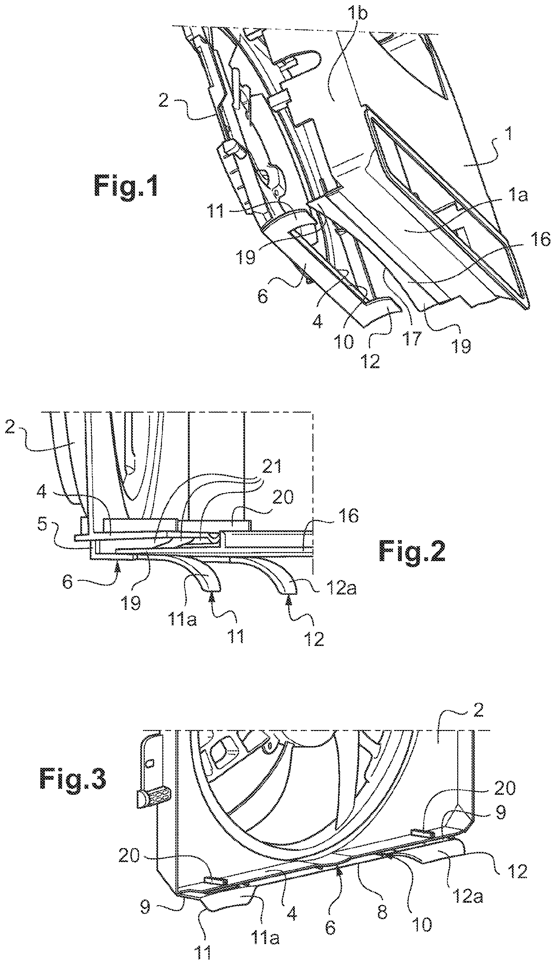

La buse 2 se présente sous la forme d'un cadre rigide rectangulaire s'étendant de façon verticale et transversale à la direction longitudinale avant-arrière du véhicule. Ce cadre présente notamment deux parois horizontales respectivement haute et basse, dont seule la paroi horizontale basse 4 est représentée sur les figures. Sur la paroi basse 4, une plaque rectangulaire allongée parallèle 6 s'attache à la paroi 4 par un pied de rattachement 5 le long du grand côté de la plaque 6 (figure 2); les trois autres côtés de la plaque 6 (un autre grand côté 8 et deux petits côtés 9) forment les bords ouverts d'une fente horizontale 10 ouverte vers l'avant (c'est-à-dire vers le guide d'air 1) et latéralement. Le terme « coté » s'entend ici comme un bord périphérique de la plaque 6.

Selon l'invention, un ou plusieurs éléments formant guide sont solidaires du grand côté 8 de la plaque 6. Dans le mode de réalisation représenté sur les figures 1 à 3, deux éléments formant guide 11, 12 distincts sont disposés latéralement. Ils comportent chacun une surface de glissement 11a, 12a, respectivement, laquelle s'étend dans le prolongement de la plaque 6 en s'écartant de la paroi 4 de la buse 2 en s'éloignant de celle-ci. Ainsi, sur les figures 1 à 3, les surfaces de glissement 11a, 12a présentent une section transversale curviligne. Cette section transversale curviligne peut par exemple être un arc de cercle dont le rayon est, par exemple, de 15 à 20mm. Par exemple, l'extrémité d'un élément formant guide 11, 12, peut être par exemple située à 10-20mm du bord du grand côté 8, perpendiculairement à la plaque 6 et située à 15-20 mm du bord de ce grand côté 8 parallèlement à la plaque 6. Bien entendu, les dimensions pourront être adaptées en fonction de l'espace disponible.

La longueur des éléments formant guide 11, 12, à savoir leur dimension perpendiculairement au grand côté 8 de la plaque 6, pourra être variable, notamment selon l'espace environnant disponible. Ainsi, les éléments formant guide 11, 12 de la figure 3 sont moins longs que ceux représentés figure 2.

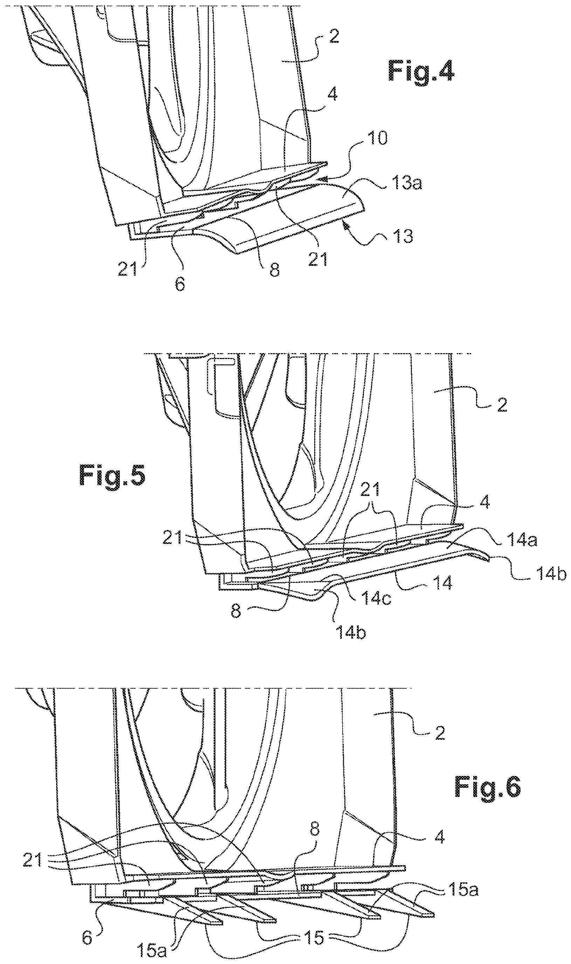

Les figures 4 à 6 représentent des variantes de réalisation des éléments formants guide.

Ainsi, la buse 2 de la figure 4 comprend un unique élément formant guide 13, lequel s'étend sur toute la longueur du grand côté 8 de la plaque 6, autrement dit sur toute la longueur de la fente 10. La section transversale de cet élément formant guide 13 est également curviligne de sorte que sa surface de glissement 13a présente une forme arrondie. Cette section transversale curviligne peut être similaire à celle des surfaces de glissement 11a, 12a du précédent mode de réalisation.

La buse 2 de la figure 5 comprend également un unique élément formant guide 14 qui s'étend sur toute la longueur du grand côté 8 de la plaque 6, mais cet élément formant guide 14 est en forme de plaque inclinée par rapport à la plaque 6. Sa surface de glissement 14a est ainsi une surface plane inclinée qui s'écarte de la buse 2. Cette inclinaison peut être de l'ordre de 30 à 60° par rapport à la plaque 6. L'extrémité de la surface de glissement 14a peut être située à 15-25mm du grand côté 8 de la plaque 6, parallèlement à cette dernière.

Dans l'exemple, les coins avant 14b de l'élément formant guide 14 sont « cornés », c'est-à-dire relevés vers le bas le long d'une « pliure » 14c disposée diagonalement. On voit donc que la surface de glissement 14a comporte latéralement deux zones 14b d'inclinaison supérieure à l'inclinaison de ladite surface de glissement 14a.

La buse 2 de la figure 6 comporte une pluralité d'éléments formant guide 15 distincts répartis le long de la plaque 6. Ces éléments formant guide 15 présentent une forme de triangle et sont solidarisés sous la plaque 6, de sorte que leurs surfaces de glissement 15a s'étendent dans le prolongement de la plaque 6, suivant des plans inclinés s'écartant de la buse 2. Cette inclinaison peut être similaire à l'inclinaison du mode de réalisation de la figure 5. Dans l'exemple, toutes les surfaces de glissement 15a présentent une même inclinaison, mais elles pourraient présenter une inclinaison différente. Par exemple, les surfaces de glissement 15a des éléments formant guide 15 situés aux extrémités pourraient présenter une inclinaison plus importante que les surfaces de glissement 15a des autres éléments formant guide 15.

Les surfaces de glissement 11a-15a des différents modes de réalisation présentent ainsi une conformation en avaloir.

Cette conformation en avaloir sur un côté de la fente 10 peut être complétée par la présence d'une ou plusieurs butées 20 disposées sur l'autre côté de la fente 10, plus précisément sur une face de la paroi 4 de la buse 2 opposée à la fente 10. Chaque butée 20 est ainsi solidaire de la paroi 4 et affleure le bord de cette paroi 4 sensiblement perpendiculairement à celle-ci, depuis un bord de la fente 10 en regard avec un bord portant le ou les éléments formant guide, à savoir depuis un bord de la fente 10 situé en regard du grand bord 8 de la plaque 6. Chaque butée 20 forme ainsi localement une sorte de rebord qui va bloquer le passage de la lèvre 16 afin d'éviter que celle-ci ne passe au dessus de la paroi 4. Ces butées 20 n'ont été représentées que sur les figures 2 et 3. Sur ces figures, elles sont au nombre de deux et sont disposées en regard des éléments formant guide 11 et 12. Elles s'étendent sur toute la profondeur de la fente. Toutefois, on pourrait prévoir une unique butée ou plus de deux butées réparties le long de la fente 10, et ce, pour chacun des modes de réalisation représentés sur les figures 1 à 6. Les butées 20 peuvent être réalisées de manière simple sous la forme de nervures, plus ou moins longues, de quelques millimètres de hauteur, par exemple de 4 à 5 mm de hauteur.

Le guide d'air 1 est sous forme d'un cadre rectangulaire comportant essentiellement des parois horizontales haute et basse reliées par des côtés verticaux. Sur la figure 1, seules sont représentées la paroi basse la et un côté vertical 1b. La paroi horizontale la se termine vers l'arrière par une lèvre arrière 16, dirigée vers la buse 2, et qui doit s'insérer relativement étroitement dans la fente 10 de la buse 2.

Dans le mode de réalisation représenté sur les figures 1 et 2, la lèvre arrière 16 est curviligne et concave vers l'arrière, de sorte qu'elle forme, en direction de la buse 2, un bord 17 en arc d'ellipse se terminant latéralement par deux pointes latérales avancées 19. L'invention n'est toutefois pas limitée à une forme curviligne 17 du bord de la lèvre 16, ce bord pouvant également être rectiligne.

Lorsqu'on présente l'un devant l'autre le guide d'air 1 et la buse 2 (figure 1), le monteur vient placer les pointes 19 du bord curviligne 17 en face des éléments formant guide 11, 12 de la buse, ces derniers coopérant avec la lèvre 16 de sorte qu'en continuant le mouvement d'approche d'un élément vers l'autre, ces pointes 19 peuvent venir porter contre les surfaces de glissement 11a, 12a des éléments formant guide 11, 12 et être guidées progressivement par ces surfaces vers la fente 10, les butées 20 évitant que la lèvre 16 ne passe au dessus de la paroi 4 à son approche de la fente 10. Dans le même temps, la forme curviligne du bord 17 permet au reste de la lèvre 16 d'avancer sans difficulté, progressivement, pour s'introduire dans la fente 10.

Un montage similaire peut être réalisé avec une réalisation du ou des éléments formant guide selon l'une des figures 4 à 6. Ainsi, par exemple pour un élément formant guide 14 tel que représenté figure 5 et une lèvre 16 présentant un bord 17 curviligne, les pointes 19 de la lèvre 16 viennent porter en premier sur les coins 14b de l'élément formant guide 14. Pour un élément formant guide 15 selon la figure 6, les pointes 19 de la lèvre 16 viennent porter en premier sur les surfaces de glissement 15a des éléments formant guide 15 latéraux.

Pour tous les modes de réalisation décrits, on observe ainsi que le ou les éléments formant guide sont agencés pour coopérer avec une lèvre, à bord curviligne ou rectiligne, pour que l'introduction de la lèvre dans la fente commence par le glissement de la lèvre (ou d'une partie de la lèvre) sur la surface de glissement et se poursuive ensuite lors de l'avancée de la lèvre par l'introduction progressive de la lèvre dans la fente. De manière similaire, chaque butée 20 est agencée pour bloquer la lèvre 16 lors de son introduction dans la fente 10 afin de l'empêcher de passer en dehors de la fente 10.

Enfin pour un meilleur maintien de la lèvre 16 du guide d'air 1 à l'intérieur de la fente 10, il peut également être prévu des nervures de calage 21 disposées perpendiculairement à la direction d'introduction de la lèvre 16 dans la fente 10 et perpendiculairement à la paroi plane 4 et à la plaque plane 4. Ces nervures de calage 21 sont agencées pour coopérer avec la lèvre 16 lors de son introduction dans la fente 10 de manière à la guider au fond de cette dernière et à la caler perpendiculairement à la paroi plane 4 lorsqu'elle est entièrement introduite dans la fente 10. Elles permettent également d'améliorer la rigidité de l'assemblage après emboîtement de la lèvre 16 dans la fente 10. Ces nervures de calage 21 sont visibles sur les figures 2 et 4 à 6. Elles sont réparties sur la longueur de la fente 10 et présentent une hauteur de plus en plus élevée du bord de la fente vers le fond de la fente, assurant un guidage de la lèvre 16 à l'intérieur de la fente 16.

Les parties hautes des deux éléments 1 et 2 peuvent également être assemblées par coopération d'une lèvre avec une fente. Toutefois, la visibilité étant meilleure, la présence d'éléments formant guide situés en avant de la fente n'est alors pas nécessaire. Eventuellement, les coins extérieurs de la fente peuvent être repliés vers l'extérieur de la fente de manière à agrandir l'épaisseur de la fente au niveau de ses extrémités et à faciliter ainsi l'insertion de pointes avancées d'une lèvre.

La buse décrite précédemment a la forme générale d'un cadre. Dans d'autres modes de réalisation de l'invention, la buse peut être constituée d'une structure rigide ayant une forme sensiblement différente d'un cadre mais pourvue de moyens de guidage et de glissement similaires à ceux décrits précédemment au moins sur l'un de ces bords périphériques.

## Revendications

1. Assemblage pour véhicule automobile d'un premier élément (2) constituant une buse de ventilateur avec un second élément (1) constituant un guide d'air, réalisé par l'assemblage d'une lèvre mince allongée (16) appartenant au second élément (1) dans une fente étroite allongée (10) formée par les trois côtés d'une plaque plane allongée (6) fixée parallèlement à une paroi plane (4) du premier élément (2), **caractérisé en ce qu'**au moins un élément formant guide (11-15) est solidaire d'un côté (8) de grande longueur de ladite plaque plane allongée (6) formant un bord de la fente (10), ledit élément formant guide (11-15) comportant une surface de glissement (11a-15a) s'étendant dans le prolongement de ladite plaque plane allongée (6) et s'écartant de la paroi plane (4) du premier élément (2) en s'éloignant de ce dernier, ledit au moins un élément formant guide (11-15) étant agencé pour coopérer avec la lèvre (16) pour que l'introduction de la lèvre (16) dans la fente (10) commence par le glissement de la lèvre (16) sur la surface de glissement (11a-15a) et se poursuive ensuite lors de l'avancée de la lèvre (16) par l'introduction progressive de la lèvre (16) dans la fente (10).

2. Assemblage selon la revendication 1, **caractérisé en ce que** la surface de glissement (14a-15a) d'un élément formant guide est une surface plane formant un plan incliné par rapport à ladite plaque plane allongée (6).

3. Assemblage selon la revendication 2, **caractérisé en ce que** la surface de glissement (14a) comporte latéralement deux zones (14b) d'inclinaison supérieure à l'inclinaison de ladite surface de glissement (14a).

4. Assemblage selon la revendication 1, **caractérisé en ce que** la surface de glissement (11a-13a) d'un élément formant guide est une surface de section transversale curviligne.

5. Assemblage selon l'une quelconque des revendications 1 à 4, **caractérisé en ce qu'**il comprend un unique élément formant guide (13-14) s'étendant sur sensiblement toute la longueur de ladite fente (10).

6. Assemblage selon l'une quelconque des revendications 1 à 5, **caractérisé en ce qu'**il comprend au moins deux éléments formant guide distincts (11, 12, 15) disposés le long de la fente (15).

7. Assemblage selon l'une quelconque des revendications 1 à 6, **caractérisé en ce que** ladite paroi plane (4) présente, sur une face opposée à la fente (10), au moins une butée (20) s'étendant dans le prolongement d'un grand bord de la fente sensiblement perpendiculairement à ladite paroi plane (4), ladite butée (20) étant agencée pour bloquer la lèvre (16) et l'empêcher de passer en dehors de la fente (10).

8. Assemblage selon l'une quelconque des revendications 1 à 7, **caractérisé en ce que** le premier élément (2) comprend à l'intérieur de la fente (10) une pluralité de nervures de calage (21) disposées perpendiculairement à la direction d'introduction de la lèvre (16) dans la fente (10) et perpendiculairement à la paroi plane (4) et à la plaque plane (6), lesdites nervures de calage (21) étant agencées pour coopérer avec la lèvre (16) lors de son introduction dans la fente (10) de manière à la guider au fond de cette dernière et à la caler perpendiculairement à la paroi plane (4) lorsqu'elle est entièrement introduite dans la fente (10).

9. Assemblage selon l'une quelconque des revendications 1 à 8, **caractérisé en ce que** la lèvre mince allongée (16) a, en direction du premier élément (2), un bord concave (17) et se termine latéralement par des pointes avancées (19).

## Patentansprüche

1. Anordnung eines ersten Elements (2), das eine Gebläsedüse darstellt, mit einem zweiten Element (1), das eine Luftführung darstellt, für ein Kraftfahrzeug, die erreicht wird durch die Anordnung einer zum zweiten Element (1) gehörenden schmalen länglichen Lippe (16) in einem engem länglichen Schlitz (10), der durch die drei Seiten einer parallel zu einer ebenen Wand (4) des ersten Elements (2) befestigten ebenen länglichen Platte (6) ausgebildet ist, **dadurch gekennzeichnet, dass** zumindest ein Führungselement (11 - 15) mit einer langen Seite (8) der ebenen längliche Platte (6), die einen Rand des Schlitzes (10) ausbildet, fest verbunden ist, wobei das führende Element (11 - 15) eine Gleitfläche (11a - 15a) aufweist, die sich in der Verlängerung der ebenen länglichen Platte (6) erstreckt und sich von der ebenen Wand (4) des ersten Elements (2) entfernt, indem sie sich von diesem weg bewegt, wobei das zumindest eine führende Element (11 - 15) dazu angeordnet ist, mit der Lippe (16) zusammenzuwirken, damit die Einführung der Lippe (16) in den Schlitz (10) durch das Gleiten der Lippe (16) auf der Gleitfläche (11a - 15a) beginnt und sich anschließend mit dem Vordringen der Lippe (16) durch die schrittweise Einführung der Lippe (16) in den Schlitz (10) fortsetzt.

2. Anordnung nach Anspruch 1, **dadurch gekennzeichnet, dass** die Gleitfläche (14a - 15a) eines Führungselements eine ebene Fläche ist, die eine in Bezug auf die ebene längliche Platte (6) geneigte Ebene ausbildet.

3. Anordnung nach Anspruch 2, **dadurch gekennzeichnet, dass** die Gleitfläche (14a) seitlich zwei Bereiche (14b) umfasst, deren Neigung stärker als die Neigung der Gleitfläche (14a) ist.

4. Anordnung nach Anspruch 1, **dadurch gekennzeichnet, dass** die Gleitfläche (11a - 13a) eines Führungselements eine Fläche mit einem gekrümmten Querschnitt ist.

5. Anordnung nach einem der Ansprüche 1 bis 4, **dadurch gekennzeichnet, dass** sie eine einziges Führungselement (13 - 14) umfasst, das sich im Wesentlichen über die gesamte Länge des Schlitzes (10) erstreckt.

6. Anordnung nach einem der Ansprüche 1 bis 5, **dadurch gekennzeichnet, dass** sie zumindest zwei Elemente umfasst, die separate Führungen (11, 12, 15) bilden, die entlang des Schlitzes (15) angeordnet sind.

7. Anordnung nach einem der Ansprüche 1 bis 6, **dadurch gekennzeichnet, dass** die ebene Wand (4) auf einer dem Schlitz (10) gegenüberliegenden Seite zumindest einen Anschlag (20) aufweist, der sich in der Verlängerung eines großen Rands des Schlitzes, der im Wesentlichen senkrecht zur ebenen Wand (4) ist, erstreckt, wobei der Anschlag (20) dazu angeordnet ist, die Lippe (16) zu blockieren und zu verhindern, dass diese über den Schlitz (10) hinaus gelangt.

8. Anordnung nach einem der Ansprüche 1 bis 7, **dadurch gekennzeichnet, dass** das erste Element (2) innerhalb des Schlitzes (10) mehrere Keilrippen (21) umfasst, die senkrecht zur Einführungsrichtung der Lippe (16) im Schlitz (10) und senkrecht zur ebenen Wand (4) und zur ebenen Platte (6) angeordnet sind, wobei die Keilrippen (21) dazu angeordnet sind, mit der Lippe (16) bei ihrer Einführung in den Schlitz (10) zusammenzuwirken, um sie bis zum Boden desselben zu führen und sie senkrecht zur ebenen Wand (4) zu verkeilen, wenn sie vollständig in den Schlitz (10) eingeführt ist.

9. Anordnung nach einem der Ansprüche 1 bis 8, **dadurch gekennzeichnet, dass** die schmale längliche Lippe (16) in Richtung des ersten Elements (2) einen konkaven Rand (17) aufweist und seitlich durch vorgerückte Punkte (19) endet.

## Claims

1. Assembly for a motor vehicle of a first element (2) constituting a fan nozzle with a second element (1) constituting an air guide performed by assembling an elongate thin lip (16) belonging to the second element (1) in an elongate narrow slot (10) formed by the three sides of an elongate flat plate (6) fixed in parallel to a flat wall (4) of the first element (2), **characterized in that** at least one element forming a guide (11-15) is secured to a long side (8) of said elongate flat plate (6) forming an edge of the slot (10), said element forming a guide (11-15) comprising a sliding surface (11a-15a) extending in the continuation of said elongate flat plate (6) and diverging from the flat wall (4) away from the first element (2), said at least one element forming a guide (11-15) being designed to cooperate with the lip (16) so that the insertion of the lip (16) into the slot (10) begins with the sliding of the lip (16) on the sliding surface (11a-15a) and then continues as the lip (16) advances, with the progressive insertion of the lip (16) into the slot (10).

2. Assembly according to Claim 1, **characterized in that** the sliding surface (14a-15a) of an element forming a guide is a flat surface forming a plane which is inclined relative to said elongate flat plate (6).

3. Assembly according to Claim 2, **characterized in that** the sliding surface (14a) comprises laterally two areas (14b) of greater inclination than the inclination of said sliding surface (14a).

4. Assembly according to Claim 1, **characterized in that** the sliding surface (11a-13a) of an element forming a guide is a surface having a curved cross section.

5. Assembly according to any one of Claims 1 to 4, **characterized in that** it comprises a single element forming a guide (13-14) extending over substantially the entire length of said slot (10).

6. Assembly according to any one of Claims 1 to 5, **characterized in that** it comprises at least two separate elements forming a distinct guide (11, 12, 15) arranged along the slot (15).

7. Assembly according to any one of Claims 1 to 6, **characterized in that**, on a face opposing the slot (10), said flat wall (4) has at least one stop (20) extending in the extension of a long edge of the slot substantially perpendicular to said flat wall (4), said stop (20) being arranged so as to block the lip (16) and to prevent it from passing outside the slot (10).

8. Assembly according to any one of Claims 1 to 7, **characterized in that** the first element (2) comprises inside the slot (10) a plurality of wedging ribs (21) arranged perpendicular to the direction of insertion of the lip (16) into the slot (10) and perpendicular to the flat wall (4) and to the flat plate (6), said wedging ribs (21) being arranged so as to cooperate with the lip (16) when it is inserted into the slot (10) so as to guide the lip to the back thereof and to wedge the lip perpendicular to the flat wall (4) when said lip is fully inserted into the slot (10).

9. Assembly according to any one of Claims 1 to 8, **characterized in that** the elongate thin lip (16) has a concave edge (17) in the direction of the first element (2) and is terminated laterally by protruding points (19).
